Europäisches Patentamt

European Patent Office

Office européen des brevets

(19)

(11) Veröffentlichungsnummer: **0 242 426 B1**

# (12) EUROPÄISCHE PATENTSCHRIFT

(45) Veröffentlichungstag der Patentschrift: **10.04.91**

(51) Int. Cl.⁵: **F25C  1/16**, //C02F1/22

(21) Anmeldenummer: **86108580.1**

(22) Anmeldetag: **24.06.86**

(54) **Verfahren und Vorrichtung zur Erzeugung einer Eiskristallsuspension mittels Gefrierverdampfung am Tripelpunkt.**

(30) Priorität: **23.04.86 CH 1646/86**

(43) Veröffentlichungstag der Anmeldung:
**28.10.87 Patentblatt  87/44**

(45) Bekanntmachung des Hinweises auf die
Patenterteilung:
**10.04.91 Patentblatt  91/15**

(84) Benannte Vertragsstaaten:
**AT DE GB SE**

(56) Entgegenhaltungen:

| | |
|---|---|
| EP-A- 0 078 164 | WO-A-85/02458 |
| DE-A- 3 213 415 | DE-A- 3 424 549 |
| DE-C- 276 011 | DE-C- 561 906 |
| DE-C- 917 491 | FR-A- 719 413 |
| FR-A- 1 305 404 | FR-A- 1 507 738 |
| FR-A- 2 491 607 | GB-A- 371 212 |
| GB-A- 1 453 645 | US-A- 3 443 393 |
| US-A- 3 714 791 | US-A- 3 817 051 |

(73) Patentinhaber: **GEBRÜDER SULZER AKTIENGE-
SELLSCHAFT**
**Zürcherstrasse 9**
**CH-8401 Winterthur(CH)**

(72) Erfinder: **Ehrsam, Christian, Dr.**
**Obermühlestrasse 2**
**CH-8400 Winterthur(CH)**

EP 0 242 426 B1

## Beschreibung

Verfahren und Vorrichtung zur Erzeugung einer Eiskristallsuspension mittels Gefrierverdampfung am Tripelpunkt.

Die Erfindung betrifft ein Verfahren zur Erzeugung einer Eiskristallsuspension mittels Gefrierverdampfung am Tripelpunkt nach dem ersten Teil von Anspruch 1, sowie eine Vorrichtung zur Durchführung des Verfahrens, nach dem ersten Teil von Anspruch 6.

Aus der US-PS 4 474 031 ist beispielsweise eine Wärmepumpenanlage bekannt, in welcher in einem Vakuumtank Eis durch Desublimation von unverdichtetem Wasserdampf erzeugt wird. Ein wesentlicher Nachteil des bekannten Verfahrens besteht darin, dass nur ein Chargenbetrieb möglich ist, und deshalb nur diskontinuierlich Eis erzeugt werden kann.

Bei einem gattungsgemäßen Verfahren, wie es z.B. in der US-PS 4 003 213 beschrieben wird, soll im Zusammenhang mit einem Wärmepumpen-Prozess ebenfalls eine Eiskristallsuspension in einem Vakuumtank am Tripelpunkt erzeugt werden. Hierbei wird der entstehende Dampf, nach Beimischung eines Antifrostmittels, durch indirekten Wärmeaustausch mit einem hierbei verdampfenden Kältemittel kondensiert.

Ein solches Verfahren ist äusserst aufwendig, da der im Antifrostmittel auskondensierte Dampf anschliessend wieder ausgetrieben werden muss.

Aus der gleichen US-PS 4 003 213 ist ein weiteres Verfahren zur Eiserzeugung durch Gefrierverdampfung am Tripelpunkt bekannt, wobei der entstehende Dampf verdichtet und bei einer Temperatur oberhalb des Tripelpunktes durch Wärmeaustausch z.B. mit Umgebungsluft kondensiert werden soll.

Ein ähnliches Verfahren ist aus dem Buch "Principles of Desalination" von K.S. Spiegler, ed. New York, 1966 (Academic Press) / Kapitel 7 "Freezing Methods" von A.E. Snyder, bekannt.

Bei dem bekannten Verfahren zur Meerwasserentsalzung wird ein Vorkühler verwendet, in welchem Eiskristallkeime gebildet werden sollen, die im weiteren Prozess zur Erzeugung von Eiskristallen durch Kristallwachstum dienen. Die Kondensation des entstehenden und anschliessend verdichteten Dampfes erfolgt ebenfalls bei einer oberhalb des Tripelpunktes liegenden Temperatur. Wesentliche Nachteile der beiden zuletzt genannten Verfahren bestehen darin, dass für grosse Volumenströme aufwendige Kompressoren infolge relativ grosser Verdichtungsverhältnisse (>1.3) erforderlich sind.

Der Erfindung liegt demgegenüber die Aufgabe zugrunde, eine kontinuierliche Herstellung von Eiskristallsuspensionen für grosse Volumenströme zu erzielen, wie sie beispielsweise zur Klimatisierung von Bergwerken erforderlich sind; bei einem möglichst reduzierten Verdichtungsverhältnis. Dieses erlaubt in vielen Fällen die Dampfkompression mit einfacheren Mitteln durchzuführen, die bei grösseren Verdichtungsverhältnissen wegen schlechten Wirkungsgrades unvorteilhaft wären.

Diese Aufgabe wird mit Hilfe der im Kennzeichen des Anspruchs 1 angegebenen Merkmalen gelöst. Vorteilhafte Ausführungsformen bzw. Weiterbildungen des erfindungsgemässen Verfahrens ergeben sich aus den Kennzeichen der Ansprüche 2 bis 5. Vorrichtungen bzw. Anlagen zur Ausführung des erfindungsgemässen Verfahrens werden in den Kennzeichen der Ansprüche 6 bis 20 angegeben.

Die Erfindung wird im folgenden anhand eines in der Zeichnung dargestellten Ausführungsbeispieles erläutert.

Fig. 1a zeigt in schematischer Darstellung einen Schnitt durch einen Apparat zur Herstellung einer Eiskristallsuspension.

In Fig. 1b ist ein Detail des Apparates perspektivisch dargestellt.

Die Fig. 2a und 2b zeigen in jeweils einem Schema einen Apparat gemäss Fig. 1a im Zusammenhang mit einem zugehörigen Dampf/Wasser/Eis-Kreislauf (Produktkreislauf) bzw. mit einem zugehörigen Kältemittelkreislauf.

In Fig. 3 ist in einem Anlagenschema eine variante Ausführungsform eines Eiserzeugers in einem Längsschnitt dargestellt.

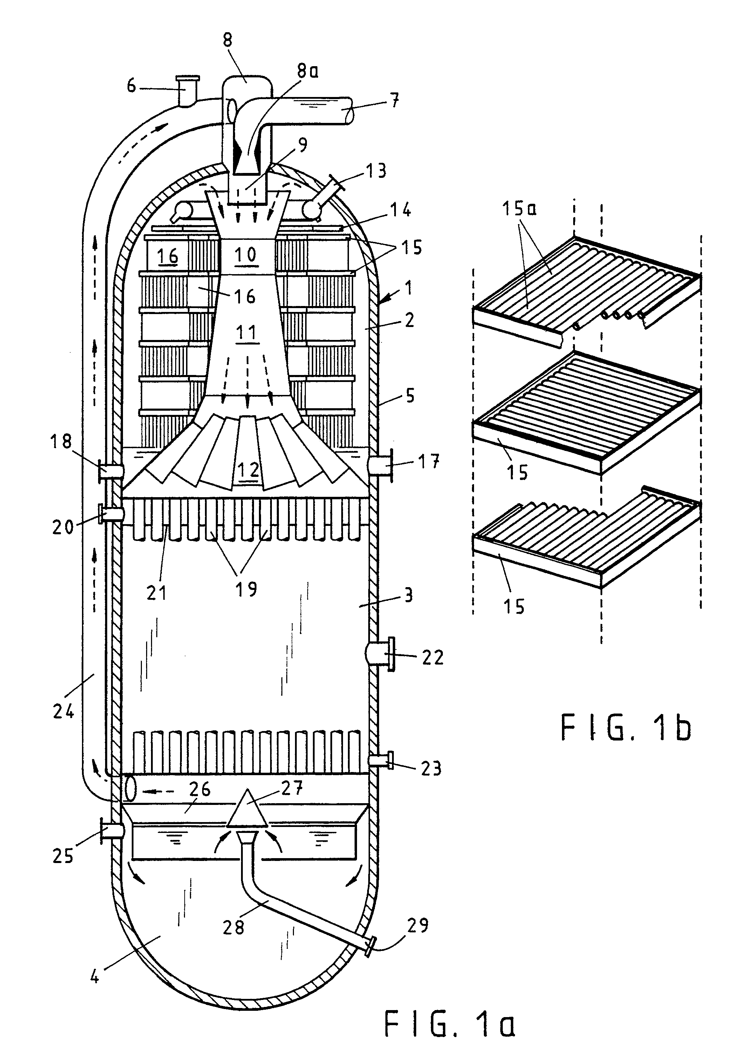

Der in Fig. 1a dargestellte Eiserzeugungsapparat 1, im folgenden mit Eiserzeuger bezeichnet, weist einen Gefrierverdampfungsraum 2, einen Kondensationsraum 3 und einen Bodenraum 4 auf.

Der Eiserzeuger 1, der unter Vakuum steht, ist von einem druckfesten Mantel 5 umschlossen. Der Anschluss an eine nicht dargestellte Vakuumpumpe erfolgt über eine Absaugleitung 6.

Eine Treibdampf-Leitung 7 mündet in eine Düsenkammer 8 eines Dampfstrahlverdichters im oberen Teil des Eiserzeugers 1. An die Düsenkammer 8 ist ein erster Mischraum 9 und an letzteren ein zweiter Mischraum 10 angeschlossen. Ein Hauptdiffusor 11 ist mit einem Bündel 12 von facettenartig aufgebauten, kleinen Diffusoren verbunden.

Im Raum 2 ist ein Grob-Verteiler 13 für rezirkulierte Eiskristallsuspension und ein Fein-Verteiler 14 angeordnet. Für die Führung der Eiskristallsuspension sind beispielsweise aus Kunststoffrohren 15a bestehende Roste 15 unterhalb des Fein-Verteilers 14 angeordnet (s. Fig. 1b).

Die während des Betriebes über die Roste 15 freifallende Eiskristallsuspension in Form von Schichten ist mit der Bezugsziffer 16 bezeichnet.

An den unteren Teil des Raumes 2 sind zwei Austrittsstutzen 17 und 18 für die Eiskristallsuspension angeschlossen.

Im Raum 3 ist ein Kondensator-Verdampferrohre 19 aufweisender Fallfilmverdampfer angeordnet. An den Raum 3 ist ein Eintrittsstutzen 20 sowie zwei Austrittsstutzen 22 und 23 für Kältemittel angeschlossen. Die Rohre 19 werden über einen Verteilboden 21 mit dem zu verdampfenden Kältemittel beschickt. An den unteren Teil des Raumes 3 ist eine Rückführleitung 24 für Wasserdampf angeschlossen, der mit einem Zusatzstoff angereiohert ist.

In den Bodenraum 4 des Eiserzeugers 1 mündet ein Stutzen 25 für die Zuführung von Wasser, das arm an Zusatzstoff ist.

Im oberen Teil des Raumes 4 ist ein Verteiler 26 für Wasser angeordnet, der im wesentlichen aus einem Ringkanal mit schräger Abdeckung besteht. Im Zentrum des Verteilers 26 ist ein Abweiskegel 27 für abgetautes Eis angeordnet. Eine Leitung 28 und Auslaufstelle 29 dient zur Ableitung einer im Bodenraum 4 erzeugten Eiskristallsuspension (primäres Eis).

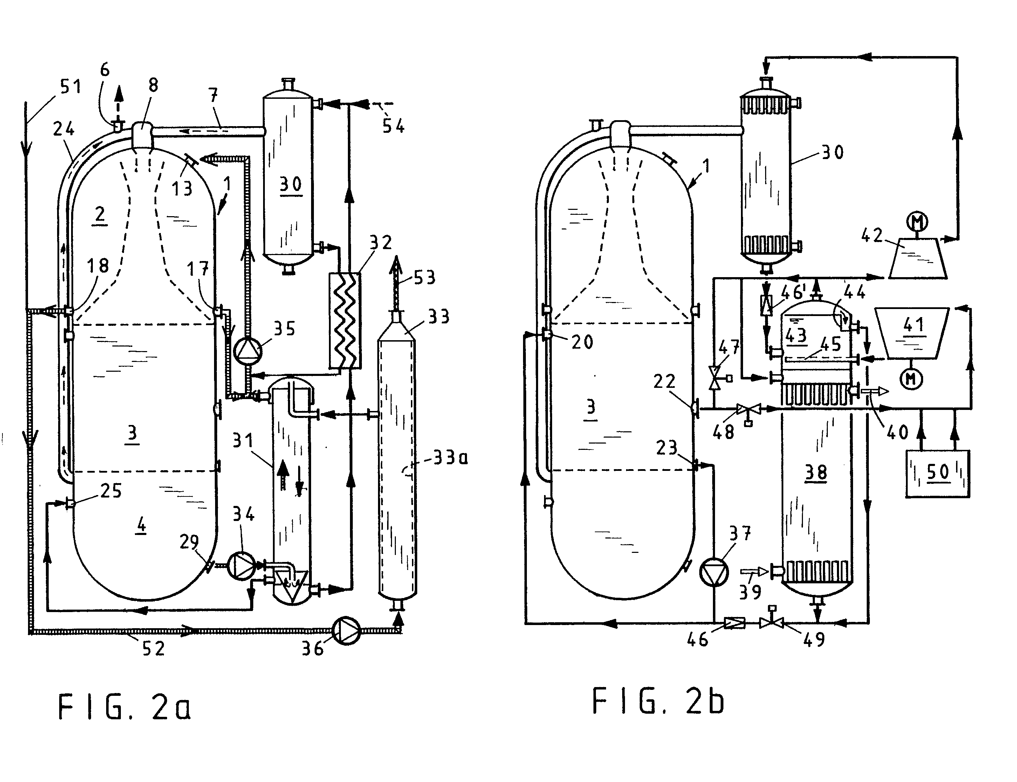

Im folgenden werden anhand der Fig. 2a und 2b der Produktkreislauf und der Kältemittelkreislauf beschrieben.

Wie aus Fig. 2a hervorgeht, weist der Produktkreislauf einen Dampferzeuger 30, einen Gegenstromwäscher 31 für primäres Eis, einen Gegenstrom-Wärmeaustauscher 32 und eine Entwässerungseinheit 33 mit einem rohrförmigen Sieb 33a auf. Weiterhin ist im Produktkreislauf eine Pumpe 34 für die primäre Eissuspension, eine Umwälzpumpe 35 für die sekundäre Eissuspension sowie eine Produktpumpe 36 vorgesehen.

Im Kältemittelkreislauf gemäss Fig. 2b ist eine Kältemittelpumpe 37, ein Kondensator 38 für komprimierten Kältemitteldampf mit einem Zulaufstutzen 39 und ein Ablaufstutzen 40 für Kühlwasser, zwei Kältemittelkompressoren 41 und 42, Drosselventile 46 und 46' und ein, zum Kondensator-Verdampfer 19 parallel geschalteter Kondensator-Verdampfer 50 angeordnet. Im Kopfteil des Kondensators 38 befindet sich ein Abscheider für flüssiges Kältemittel 43, der gleichzeitig ein Enthitzer für das im Kompressor 41 verdichtete und überhitzte Kältemittel ist, welches durch ein Verteilrohr 45 in den Abscheider 43 eingeleitet wird. Mit dem oberen Teil des Abscheiders 43 ist ein Ueberlauf 44 verbunden. Die Funktionsweise der Ventile 47 bis 49 wird an nachstehender Stelle angegeben.

Im folgenden wird die Betriebsweise des Eiserzeugers 1 im Zusammenhang mit dem Produktkreislauf und dem Kältemittel kreislauf erläutert.

Der bei der Gefrierverdampfung im Raum 2 entstehende Wasserdampf wird in dem, aus der Treibdüse 8a, der Düsenkammer 8, den Mischräumen 9 und 10 und den Diffusoren 11 und 12 bestehenden Dampfstrahlverdichter komprimiert. Hierbei wirkt als Treibmittel Dampfgemisch aus der Leitung 7, das zunächst das aus dem Raum 4 über die Leitung 24 herangeführte Dampfgemisch durch Vermischung beschleunigt. Der so entstandene Dampfstrahl wirkt danach als Treibstrahl für den Niederdruckdampf aus dem Gefrierverdampfungsraum 2.

Das Dampfgemisch besteht aus Wasserdampf und einem Zusatzstoff, der in Wasser löslich ist und leichter als Wasser siedet. Beim Gefrieren wird der Zusatzstoff nicht in die Eiskristalle eingebaut. Im Ausführungsbeispiel soll Aethanol verwendet werden. Dieses hat den Vorteil, dass die Aethanollösung beim Tripelpunkt einen Dampfdruck aufweist, der niedriger als der Dampfdruck von reinem Wasser (6.1 mbar) ist. Hierdurch wird eine Erniedrigung des Dampfdruckes des Gemisches am Tripelpunkt auf beispielsweise 5.9 mbar im Raum 3 erzielt.

Im Raum 2 wird vorteilhaft bei einem möglichst hohen Dampfdruck von beispielsweise ca. 5.8 mbar an der Oberfläche der gefrierverdampfenden Eiskristallsuspension gearbeitet, was durch an späterer Stelle angegebene Massnahmen erreicht werden kann.

Da erfindungsgemäss ein relativ kleines Druckverhältnis von Raum 3 / Raum 2 von beispielsweise ca. 1.1 erreicht werden kann, und grosse Volumenströme im allgemeinen verarbeitet werden müssen, wirkt sich dieses günstig auf die Kompressionsleistung aus. Es kann daher mit Vorteil ein Dampfstrahlverdichter eingesetzt werden, so dass der gesamte Eiserzeugerapparat als Einheit ohne mechanisch bewegte Teile ausgebildet werden kann. Es sei jedoch darauf hinge wiesen, dass die Erfindung auch die Anwendung von Axial- oder Radialkompressoren umfassen soll.

Im als Kondensator-Verdampfer ausgebildeten Raum 3 des Eiserzeugers 1 wird das in die Rohre 19 eintretende Dampfgemisch durch Wärmeaustausch mit verdampfendem Kältemittel teilweise kondensiert.

Auf den inneren Oberflächen der Rohre 19 entsteht bei der Kondensation des Dampfgemisches "primäres Eis". Aufgrund des Zusatzstoffes, im Ausführungsbeispiel Aethanol, welches mit auskondensiert, wächst das primäre Eis in Form feiner Eisschuppen, die ein heterogenes Gefüge von Eiskristallen und wässriger Aethanollösung bilden.

Wenn, wie erwähnt, es auch von besonderem Vorteil ist, einen Zusatzstoff zu verwenden, für den der Dampfdruck der wässrigen Lösung beim Tripelpunkt nicht höher als der Dampfdruck von reinem Wasser am Tripelpunkt ist, so umfasst die Erfindung auch solche Stoffe, die zwar im Wasser löslich und flüchtiger als Wasser sind, jedoch keine Dampfdruckserniedrigung hervorrufen. Z.B. könnte auch Aceton als Zusatzstoff verwendet werden, durch dessen Zugabe eine Gefrierpunktserniedrigung erzielt und ebenfalls eine Bildung eines Gemenges von Eiskristallen und Kondensat in den Rohren 19 erreicht wird.

Für den Transport der Eispartikel in den Raum 4 ist es lediglich erforderlich, diese in ihrem Grenzbereich an der Rohrwand anzuschmelzen. Hierzu wird kurzzeitig heisser Kältemitteldampf durch den die Rohre 19 umgebenden Raum geleitet, wobei der Kältemitteldampf kondensiert.

Nach dem Abtauen sind die Oberflächen mit einem Film von flüssigem Kondensat bedeckt. Beim anschliessenden Absaugen des Kältemitteldampfes erfolgt eine Unterkühlung des Kondensatfilmes und darauf Keimbildung an den Rohroberflächen.

Der im Grenzbereich von Raum 3 zu Raum 4 austretende Wasserdampf ist an Aethanol angereichert und wird durch Leitung 24 dem Dampfstrahlverdichter zugeführt.

Im Raum 4 erfolgt eine Umwandlung des teilgefrorenen Kondensats in eine Eiskristallsuspension. Das partiell, d.h. nur an den Oberflächen aufgeschmolzene primäre Eis, zerfällt im Raum 4 in Scherben. Diese Eisscherben, deren Temperatur unterhalb von -1 °C liegt, werden mit durch den Einlass 25 eingeleitetem Wasser vermischt, welches arm an Aethanol ist und das eine Gefriertemperatur von beispielsweise etwa -0, 5 °C aufweist.

Aufgrund physikalischer Gesetzmässigkeiten findet an den Oberflächen der Eisscherben ein Eiswachstum statt, das mit einem partiellen Schmelzen innerhalb der Scherben gekoppelt ist. Dank dieses Umkristallisationsprozesses lösen sich die Scherben in kleinere Agglomerate von Eiskristallen oder sogar in einzelne Kristalle auf.

In dieser umgewandelten Form lässt sich das primäre Eis leicht aus Raum 4 durch Leitung 28 und Auslass 29 ausspülen.

Die z.B. 10%ige Eiskristallsuspension, die schliesslich zur Erzeugung von sekundärem Eis und damit des Produktes dient, wird im Gegenstromwäscher 31 gewaschen, d.h. weitgehend von Aethanol befreit.

Das am Boden des Gegenstromwäschers 31 austretende, äthanolhaltige Wasser wird im Gegenstromwärmeaustauscher 32 erwärmt und im Dampferzeuger 30, der als Fallfilmverdampfer ausgebildet ist, und der von komprimiertem Kältemitteldampf beheizt ist, verdampft und bildet den an Aethanol reichen Treibdampf des Dampfstrahlverdichters.

Das am Boden des Dampferzeugers 30 austretende, an Aethanol verarmte Wasser wird nach Abkühlung im Gegenstromwärmeaustauscher 32 der Umwälzpumpe 35 zugeführt.

Eine Teilmenge des äthanolhaltigen Wassers aus dem Bodenbereich des Gegenstromwäschers 31, das weniger Aethanol aufweist als das in den Rohren 19 anfallende Kondensat, wird zur Umwandlung des primären Eises in die primäre Eiskristallsuspension im Raum 4 verwendet.

Der am Kopfteil des Gegenstromwäschers 31 austretenden Suspension von primärem Eis wird eine Teilmenge der Suspension von sekundärem Eis aus dem Raum 2 zugemischt und mittels Pumpe 35 in den Kopfteil des Raumes 2 eingeleitet. Der Eisgehalt dieser Suspension beträgt beispielsweise 10 %.

Im Raum 2 erfolgt die sekundäre Eiserzeugung, d.h. die Haupteiserzeugung durch Kristallwachstum bei Gefrierverdampfung am Tripelpunkt durch Vergrösserung einerseits der primären Eiskristalle und andererseits der rezirkulierten, sekundären Eiskristalle.

Der Dampfdruck bei der Gefrierverdampfung ist um so grösser, je grösser die Teilchendichte der suspendierten Eiskristalle ist. Ein möglichst hoher Dampfdruck im Raum 2 wird, wie an vorstehender Stelle angegeben ist, angestrebt, um ein möglichst geringes Verdichtungsverhältnis von Raum 2 zu Raum 3 zu ermöglichen. Eine grosse Teilchendichte der Eiskristalle im Raum 2 wird dadurch erreicht, dass die in den Räumen 3 und 4 entstandenen Eiskristalle ständig in den Raum 2 eingeleitet werden.

Eine Teilmenge der im Raum 2 entstandenen Eiskristallsuspension mit einem Eisgehalt von beispielsweise 20 % wird dem Eiserzeuger 1 durch den Auslass 18 entnommen und mit dem durch Leitung 51 in die Anlage eingeleiteten Speisewasser vermischt.

Die dünnflüssige Suspension wird durch Leitung 52 mittels einer Pumpe 36 in die Entwässerungsvorrichtung 33 eingeleitet, die ein rohrförmiges Sieb 33a aufweist.

Während das abgetrennte Wasser einerseits als Waschwasser in dem Gegenstromwäscher 31 und andererseits als Transportwasser für das gewaschene primäre Eis dient, kann das Endprodukt, beispielsweise ein 50%iger Eiskristallbrei durch Leitung 53 seiner Verwendung bzw. einer weiteren Aufbereitung zugeführt werden.

Das Produkt, das vorteilhaft beispielsweise zur Klimatisierung von Bergwerken dienen kann, weist ausserdem eine gute Waschqualität auf, so dass es auch z.B. zur Teilentsalzung von salzbefrachtetem Grubenwasser verwendet werden kann.

Im Ausführungsbeispiel dient als thermische Quelle eine Kältemaschine (s. Fig. 2b). Hierbei wird im Kompressor 41 verdichteter Kältemitteldampf nach Kondensation im Kondensator 38 und Entspannung im Drosselventil 46 in den Raum 3 des Eiserzeugers 1 eingeleitet, worin er durch Wärmeaustausch mit in den Rohren 19 kondensierendem Wasserdampfgemisch verdampft und bei geöffnetem Ventil 48 in die Saugseite des Kompressors 41 zurückströmt. Der nichtverdampfte Teil des Kältemittels wird mittels Pumpe 37 in den Raum 3 zurückgefördert.

Der zum Betrieb des Verdampfers 30 benötigte Kältemitteldampf wird im Kompressor 42 verdichtet und nach Kondensation und anschliessender Entspannung im Drosselventil 46' in den Kältemittelabscheider 43 eingeleitet. Grundsätzlich wäre es auch möglich, im Kompressor 41 verdichteten Dampf zur Erzeugung des Treibdampfes zu verwenden.

Das Abtauintervall ist äusserst kurz und stört daher die kontinuierliche Eiserzeugung nur geringfügig, da die Temperaturerhöhung innerhalb der Rohre 19 des Kondensator-Verdampfers nur unerheblich ist.

Während des Abtauens sind die Ventile 48 und 49 im Kältekreislauf geschlossen und Ventil 47 ist geöffnet und alle Pumpen und Kompressoren im Betrieb.

Vorteilhafterweise sind zwei oder mehr parallel zueinander geschaltete Kondensator-Verdampfer mit Rohren 19 von Eiserzeugern 1 vorgesehen. Dabei soll jeweils nur höchstens in einem dieser Kondensator-Verdampfer das Abtauen erfolgen. Die restlichen befinden sich im Normalbetrieb und liefern den Dampf für den Kompressor 41. Dieser Sachverhalt ist durch den Block 50 in Fig. 2b angedeutet, der einen, unter Umständen mehrteilig ausgebildeten Kondensator-Verdampfer 50 symbolisiert.

Aethanolverluste werden an der Stelle 54 des Dampferzeugers 30 gedeckt.

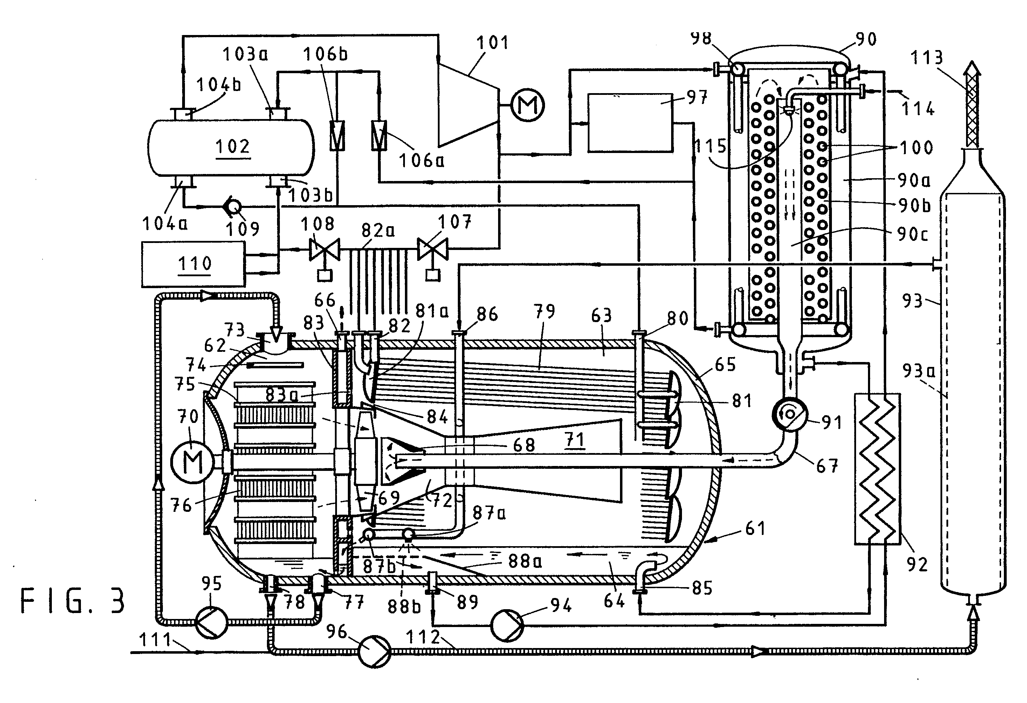

Der in Fig. 3 dargestellte Eiserzeuger 61 weist wie Fig. 1a ebenfalls einen Gefrierverdampfungsraum 62, einen Kondensationsraum 63 und einen Bodenraum 64 auf. Der liegend angeordnete Eiserzeuger 61 ist von einem druckfesten Mantel 65 umschlossen. Der Anschluss an eine nicht dargestellte Vakuumpumpe erfolgt über eine Absaugleitung 66.

Im Eiserzeuger 61 ist ein, von einem Motor 70 angetriebener, einstufiger Axialverdichter angeordnet. In Serie zu dem Axialverdichterrad 69 ist ein Dampfstrahlverdichter mit einer Düse 68 und einem Mischraum 72 angeordnet. Die beiden Verdichter weisen einen gemeinsamen Diffusor 71 auf.

Im Raum 62 ist ein Verteiler 74 für rezirkulierte Eiskristallsuspension angeordnet. Für die Führung der Eiskristallsuspension sind Roste 75 unterhalb des Verteilers 74 angeordnet. Die während des Betriebes über die Roste 75 freifallende Eiskristallsuspension in Form von Schichten ist mit der Bezugsziffer 76 bezeichnet. An den unteren Teil des Raumes 62 sind zwei Austrittsstutzen 77 und 78 für Eiskristallsuspension angeschlossen.

Im Raum 63 ist ein Rohre 79 aufweisender gefluteter Kondensator-Verdampfer angeordnet. Die Rohre 79 sind in Rohrbündeln mit Kältemittelverteilern 81 und Sammlern 81a zusammengefasst. Die Rohre 79 sind in Strömungsrichtung leicht steigend angeordnet, um die Auftriebskräfte der Dampfblasen zur Unterstützung der Kältemittelströmung nutzen zu können.

Das Kältemittel wird den einzelnen Kältemittelverteilern 81 während des Betriebes durch den Anschlussstutzen 80 zugeleitet. Das teilverdampfte Kältemittel wird aus den Sammlern 81a für jedes Rohrbündel separat zu einer Sammelleitung 82a geführt, die sich auf der gleichen Höhe wie der Kältemittelabscheider 102 befindet. Von den, jedem Rohr bündel zugehörigen Austrittsstutzen 82 sind in der Zeichnung lediglich zwei dargestellt.

Die Räume 62 und 63 sind durch eine Trennwand 83 unterteilt. Die Trennwand ist hohl ausgebildet und mit Oeffnungen 83a versehen. Während des Betriebes werden die in den Apparat durch das Speisewasser eingebrachten Inertgase, insbesondere Luft, durch die Oeffnungen 83a, Hohlwand 83 und Leitung 66 mittels einer Vakuumpumpe abgesaugt.

Der Raum 63 steht mit dem Mischraum 72 durch einen düsenartigen Ringkanal 84 in Verbindung. Durch ihn wird der während des Betriebes sich im Raum 63 mit Zusatzstoff, z.B. Aethanol, anreichernde Dampf rezirkuliert.

In den Bodenraum 64 des Eiserzeugers 1 mündet ein Stutzen 85 für die Zuführung von Wasser, das arm an Zusatzstoff ist. Von dem Bodenraum 64 ist durch eine Wand 88a und ein Sieb 88b ein Teilraum für die Ableitung von eisfreiem Wasser durch einen Austrittsstutzen 89 abgetrennt.

Mit dem Eiserzeuger steht analog zum ersten Ausführungsbeispiel ein Produkt- und ein Kältemittelkreislauf in Verbindung.

Während des Betriebes arbeitet die Anlage in der folgenden Weise:
Der bei der Gefrierverdampfung im Raum 62 entstehende Wasserdampf wird in dem aus Axialverdichterrad 69 und Diffusor 71 bestehenden Axialverdichter komprimiert. Ein zusätzlicher Beitrag zur Kompression des Dampfes wird in dem in Serie dazugeschalteten Dampfstrahlverdichter 68, 71 bewirkt. Hierbei wirkt als Treibmittel Dampf aus einem Dampferzeuger 90, welcher durch eine Leitung 67 in den Eiserzeuger 61 eingeleitet wird.

Dieser Dampf ist mit einem Zusatzstoff, z.B. Aethanol, angereichert. Im Mischraum 72 wird der Treibdampf mit dem Dampf aus Raum 62 und dem mit Zusatzstoff angereicherten, durch Ringkanal 84 zuströmenden Dampf gemischt.

Für die Druckverhältnisse in den Räumen 62, 63 und 64 gelten die zum ersten Ausführungsbeispiel (Fig. 1a bis 2b) gemachten Ausführungen.

Im als Kondensator-Verdampfer ausgebildeten Raum 63 wird das die Rohre 79 umströmende Dampfgemisch durch Wärmeaustausch mit die Rohre 79 durchströmenden Kältemittel auf den Aussenwänden der Rohre 79 teilweise kondensiert. Bei der Kondensation des Dampfgemisches auf den äusseren Rohroberflächen entsteht "primäres Eis". Zur Vermeidung von Wiederholungen wird für die in den Räumen 63 und 64 stattfindenden physikalischen Vorgänge auf die entsprechenden Ausführungen im ersten Ausführungsbeispiel verwiesen.

Im vorliegenden Fall sei zunächst angenommen, dass der in Leitung 67 angeordnete Drehschieber 91 während des ganzen Betriebes geöffnet ist, d.h. er könnte bei dieser Betrachtungsweise ganz in Fortfall kommen.

Das im Raum 63 entstehende Dampfgemisch reichert sich auf dem Strömungsweg zu dem Ringkanal 84 mit Zusatzstoff an.

Die im Raum 64 entstehende Eiskristallsuspension wird auf die gleiche Art und Weise wie im ersten Ausführungsbeispiel mit Hilfe von, durch den Eintrittsstutzen 85 eingeleitetem, an Zusatzstoff weitgehend verarmten Wasser gewonnen.

Mit Hilfe von ebenfalls an Zusatzstoff verarmten Wasser wird die Eiskristallsuspension (primäres Eis) ausgespült. Hierzu wird aus dem produktkreislauf stammendes Wasser durch Eintrittsstutzen 86 in den Raum 64 durch Düsen 87a und 87b eingesprüht. Das durch das Sieb 88b abströmende, eisfreie Wasser wird in den Dampferzeuger 90 nach Erwärmung im Wärmeaustauscher 92 mittels einer Pumpe 94 eingeleitet. Die verdünnte Eiskristallsuspension strömt in den Bodenraum des Gefrierverdampfungsraumes 62 und wird von dort zusammen mit einer Teilmenge der im Raum 62 entstehenden Eiskristallsuspension (sekundäres Eis) mittels Pumpe 95 durch Eintrittsstutzen 73 rezirkuliert.

Die Restmenge der Eiskristallsuspension (sekundäres Eis) wird dem Eiserzeuger 61 durch den Auslass 78 entnommen und mit dem durch Leitung 111 in die Anlage eingeleiteten Speisewasser vermischt. Die dünnflüssige Suspension wird durch eine Leitung 112 mittels einer Pumpe 96 in eine Entwässerungsvorrichtung 93 eingeleitet, die ein rohrförmiges Sieb 93a aufweist. Während das abgetrennte Wasser durch Einlass 86 in den Eiserzeuger zurückgeführt wird, kann das Endprodukt, beispielsweise ein 50%iger Eiskristallbrei durch Leitung 113 seiner Verwendung bzw. einer weiteren Aufbereitung zugeführt werden.

Auch in diesem Ausführungsbeispiel dient als thermische Quelle eine Kältemaschine.

Hierbei wird Kältemittel in einem Kompressor 101 verdichtet, zum grössten Teil in einem Kondensator 97 verflüssigt, in einem Drosselorgan 106a entspannt und durch Einlass 103a in einen Kältemittel-Abscheider 102 eingeleitet. Während der Ausfrierperiode wird flüssiges Kältemittel durch den Austritt 104a in die Rohre 79 des Raumes 63 eingeleitet, und das entstehende Zweiphasengemisch aus Dampf und Flüssigkeit durch die Auslässe 82 bei geöffnetem Ventil 108 (Ventil 107 ist geschlossen) durch den Eintritt 103b in den Kältemittel-Abscheider 102 zurückgeführt.

Eine Teilmenge des im Kompressor 101 verdichteten Kältemittels wird in dem im Dampferzeuger 90 angeordneten Kondensator 98 verflüssigt und mit dem im Kondensator 97 verflüssigten Kältemittel zusammengeführt.

Der Verdampfer 90, der im vorliegenden Ausführungsbeispiel in erster Linie die Aufgabe hat, den Zusatzstoff aus Wasser auszutreiben, weist drei konzentrische Räume 90a, 90b und 90c auf.

Der äussere Raum 90a ist als Fallfilmverdampfer ausgebildet, wobei das im Wärmeaustauscher 92 erwärmte, Zusatzstoff enthaltende Wasser teilweise durch Wärmeaustausch mit kondensierendem Kältemittel verdampft wird.

Hierbei tritt der Zusatzstoff zum grössten Teil in die Dampfphase über.

Im mittleren Raum 90b, der nach oben abgeschlossen ist, sind Rohre eines Wasserkühlers 100 angeordnet, wobei die Wasseranschlüsse nicht dargestellt sind. Aus dem im mittleren Raum 90b aufsteigenden Dampf wird an den Kühlwasserschlangen Wasser auskondensiert, wobei sich der Dampf weiter mit Zusatzstoff anreichert, bevor er in den inneren Raum 90c eintritt.

Der mittlere Raum 90b könnte beispielsweise auch in Art einer Rektifizierkolonne ausgeführt sein.

In den Raum 90c wird durch Leitung 114 und eine Düse 115 flüssiger Zusatzstoff auf die innere Oberfläche des Raumes eingesprüht zur Deckung der Verluste an Zusatzstoff.

An der Wand zwischen den Räumen 90b und 90c wird auf der Innenseite der eingesprühte Zusatzstoff verdampft, wobei gleichzeitig auf der Aussenseite Wasser auskondensiert. Das an Zusatzstoff weitgehend verarmte Wasser wird am Boden des Dampferzeugers 90 entnommen, in Wärmeaustausch mit dem zugeführten Wasser gebracht und in den Raum 64 des Eiserzeugers 61 eingeleitet.

Der an Zusatzstoff angereicherte Wasserdampf wird bei geöffnetem Drehschieber 91 durch Leitung 67 in den Eiserzeuger 61 zurückgeführt.

Im vorliegenden Fall war angenommen worden, dass der Drehschieber 91 ständig geöffnet ist, bzw. überhaupt nicht vorhanden ist. Bei dieser Betriebsweise ist der Dampfstrahlverdichter 68, 71 ständig in Betrieb, so dass während des Ausfriervorganges ein Teil der Verdichterleistung von dem Dampfstrahlverdichter aufgebracht wird, wobei die Hauptleistung vom Axialverdichter 69 erzeugt wird.

Während des Abtauens wird bei geschlossenem Ventil 108 und geöffnetem Ventil 107 heisser Kältemitteldampf durch die Stutzen 82 in den Rohrbündelwärmeaustauscher 79 eingeleitet und teilweise verflüssigt.

Das Zweiphasengemisch wird im Drosselventil 106b entspannt (das Rückschlagventil 109 ist in Funktion) und in den Kältemittel-Abscheider 102 eingeleitet.

Mit Block 110 sind schematisch mehrere parallelgeschaltete Kondensator-Verdampfer von Eiserzeugern analog zu Block 50 in Fig. 2b bezeichnet.

Vorteilhaft ist der Drehschieber 91 auch während des Abtauvorganges geöffnet, so dass durch die Zufuhr von angereichertem Dampf in den Eiserzeuger 61 der Abtauvorgang beschleunigt wird, da der Druck im Raum 63 ansteigt.

Vorteilhaft kann der Drehschieber 91 auch während des eigentlichen Ausfriervorganges intermittierend in Offen- und Schliessstellung gebracht werden.

Während des Zeitintervalles, in dem der Drehschieber 91 geschlossen ist, liegt der Druck im Raum 63 bei dem dem Tripelpunkt entsprechenden Dampfdruck oder etwas unterhalb davon. Dann kondensiert und friert aus dem Dampfgemisch an den Oberflächen der Rohre 79 Eis aus. Bei geöffnetem Drehschieber 91 steigt der Druck im Raum 63 oberhalb des Dampfdruckes am Tripelpunkt an, und es erfolgt eine Kondensation des Dampfes ohne Gefrieren. Hierbei findet ein Teilschmelzen des Eisansatzes und eine Ansammlung des Kondensats und der Schmelze an der Unterseite der Rohre 79 statt.

Nach Unterbruch der Dampfzufuhr gefriert das Kondensat an der Unterseite der Rohre, und es bilden sich wachsende "Eisbärte" aus.

Wenn die "Eisbärte" eine gewisse Länge, von z.B. ca. 1 cm erreicht haben, empfiehlt es sich, die Abtauphase (Zufuhr von heissem Kältemittel) einzuleiten.

Aufgrund der massenreichen "Eisbärte" fallen diese während des Abtauens relativ schnell ab.

## Ansprüche

1. Verfahren zur Erzeugung einer Eiskristallsuspension mittels Gefrierverdampfung am Tripelpunkt, wobei der entstehende Dampf verdichtet und anschliessend kondensiert wird, und die entstandene Eiskristallsuspension zu Produkt aufbereitet wird, dadurch **gekennzeichnet**, dass beim Verdichten des Dampfes diesem ein Stoff zugemischt wird, der in Wasser löslich ist und leichter als Wasser siedet, und dass an einem Wärmetauscher das Gemisch durch indirekten Wärmeaustausch mit einem Kühlmittel auf seinen Tripelpunkt gekühlt, kondensiert und teilweise ausgefroren wird, wobei ein heterogenes Gemisch von Eispartikeln und wässriger Lösung des zugemischten Stoffs entsteht, dass sodann das Eis-Flüssigkeitsgemisch, das mittels eines Abtaubetriebs vom Wärmetauscher losgelöst wird, zumindest teilweise in Eis und wässrige Lösung getrennt wird, dass dann aus der wässrigen Lösung der zugemischte Stoff zumindest teilweise abgetrennt und dem Verfahren erneut zugeführt wird und dass schliesslich die abgetrennten Eispartikel zur weiteren Eiserzeugung der gefrierverdampfenden Eissuspension zugeführt werden.

2. Verfahren nach Anspruch 1, dadurch gekennzeichnet, dass der Stoff dem Dampf intermittierend zugemischt wird.

3. Verfahren nach Anspruch 1, dadurch gekennzeichnet, dass der Stoff dem Dampf ausschliesslich während des Abtaubetriebes zugemischt wird.

4. Verfahren nach Anspruch 1, dadurch gekennzeichnet, dass die wässerige Lösung, die bei der Kondensation des verdichteten Wasserdampfes und dem zugemischten Stoff entsteht, beim Tripelpunkt einen Dampfdruck aufweist, der nicht höher als der Dampfdruck von reinem Wasser am Tripelpunkt ist.

5. Verfahren nach Anspruch 1, dadurch gekennzeichnet, dass als zugemischter Stoff Aethanol verwendet wird.

6. Vorrichtung zur Durchführung eines Verfahrens nach Anspruch 1, mit einem Eiserzeuger (1; 61) mit einem ersten Raum (2; 62), in welchem eine Eiskristallsuspension durch Gefrierverdampfung erzeugt wird, einen zweiten Kühlraum (3; 63), in welchem Wärmetauscher (19; 79) angeordnet sind, und worin eine Kondensation des aus Wasserdampf und dem zugemischten Stoff bestehenden Gemisches an den Wärmetauscher (19; 79) erfolgt, sowie mit einem Verdichter (8-12; 69,71) zwischen den beiden Räumen (2,3; 62,63), dadurch gekennzeichnet, dass zwischen den beiden Räumen (2,3; 62,63) eine Zuspeiseleitung (6; 67) für den dem Dampf zuzumischenden Stoff angeordnet ist, dass die Wärmetauscher (19, 79) derart betreibbar sind, dass im zweiten Kühlraum (3; 63) ein Ausfrieren von Eispartikeln an den Wärmetauscher (19; 79) sowie anschliessend ein Abtauen der Eispartikel erfolgt, dass mit dem zweiten Raum (3; 63) ein dritter Raum (4; 64) verbunden ist, in den das während des Abtaubetriebs freigesetzte Gemisch von Eis und wässriger Lösung gelangt und dass ferner anschliessend an den dritten Raum (4; 64) Hilfsvorrichtungen (31, 30) vorgesehen sind zur Trennung der Eispartikel von der wässrigen Lösung sowie zur Trennung des zugemischten Stoffes von der wässrigen Lösung und zur Zuführung der abgetrennten Eispartikel zum ersten Raum (2; 62).

7. Vorrichtung nach Anspruch 6, dadurch gekennzeichnet, dass zur Verdichtung des Dampfes mehrere Verdichter parallel angeordnet sind.

8. Vorrichtung nach Anspruch 6, dadurch gekennzeichnet, dass der Eiserzeuger (1) als bauliche Einheit ausgeführt ist, wobei die drei Räume (2,3,4) senkrecht übereinander stehen.

9. Vorrichtung nach Anspruch 6, dadurch gekennzeichnet, dass der Verdichter ein Dampfstrahlverdichter (8 bis 12) ist.

10. Vorrichtung nach Anspruch 6 und 8, dadurch gekennzeichnet, dass an den oberen Teil des dritten Raumes (4) des Eiserzeugers (1) eine Ableitung (24) für Rückführung von mit zugemischtem Stoff angereichertem Wasserdampf in den Ansaugraum des Verdichters (8 bis 12) angeschlossen ist.

11. Vorrichtung nach Anspruch 9 und 10, dadurch gekennzeichnet, dass die Rückführleitung (24) in die erste Stufe (8,9) des Dampfstrahlverdichters (8 bis 12) führt.

12. Vorrichtung nach Anspruch 6, dadurch gekennzeichnet, dass der Eiserzeuger (61) als bauliche Einheit ausgeführt ist, wobei die ersten beiden Räume (62,63) horizontal nebeneinander und der dritte Raum (64) unterhalb des zweiten Raumes (63) angeordnet ist.

13. Vorrichtung nach Anspruch 6, dadurch gekennzeichnet, dass der Verdichter als Axialverdichter (69,71) ausgebildet ist.

14. Vorrichtung nach Anspruch 13, dadurch gekennzeichnet, dass zusätzlich noch ein Dampfstrahlverdichter (68,71) angeordnet ist.

15. Vorrichtung nach Anspruch 8 und 9, dadurch gekennzeichnet, dass an den dritten Raum (4) des Eiserzeugers (1) eine in einen Gegenstromwäscher (31) führende Leitung angeschlossen ist, dass der obere Teil des Gegenstromwäschers (31) über eine Förderleitung für Eiskristallsuspension mit dem oberen Teil des ersten Raumes (2) verbunden ist, und dass weiterhin ein Dampferzeuger (30) angeordnet ist, welcher wasserseitig parallel zum Gegenstromwäscher (31) angeordnet und dampfseitig mit dem Verdichter (8 bis 12) verbunden ist, und dass an den unteren Teil des Gegenstromwäschers (31) eine Ableitung für Wasser in den Einlass (25) des dritten Raumes (4) des Eiserzeugers (1) angeschlossen ist.

16. Vorrichtung nach Anspruch 15, dadurch gekennzeichnet, dass an den unteren Teil des ersten Raumes (2) eine Ableitung für Eiskristallsuspension angeschlossen ist, in welche die Zuführleitung (51) für Speisewasser mündet, und dass die Ableitung (52) des aus Speisewasser und Eiskristallsuspension bestehenden Gemisches an eine Entwässerungs-Einheit (33) angeschlossen ist, welche eine Ableitung (53) für eingedicktes Produkt aufweist, und die wasserseitig mit dem Gegenstromwäscher (31) verbunden ist.

17. Vorrichtung nach Anspruch 15, dadurch gekennzeichnet, dass an den unteren Teil des ersten Raumes (2) des Eiserzeugers (1) eine Ableitung angeschlossen ist für Rückführung einer Teilmenge der Eiskristallsuspension in den oberen Teil des ersten Raumes (2).

18. Vorrichtung nach Anspruch 12 und 14, dadurch gekennzeichnet, dass an den dritten Raum (64) des Eiserzeugers (61) eine Ableitung für Wasser angeschlossen ist, welche in einen der Abtreibung des zugemischten Stoffes dienenden Dampferzeuger (90) mündet, welcher dampfseitig mit dem Eiserzeuger (61) durch eine Zuleitung (67) verbunden ist, wobei der Dampf als Treibstrahl im Dampfstrahlverdichter (68,71) verwendet wird.

19. Vorrichtung nach Anspruch 18, dadurch gekennzeichnet, dass der Dampferzeuger (90) drei konzentrische Räume (90a,90b,90c) aufweist, wobei der äusserste Raum (90a) als Fallfilmverdampfer, der mittlere Raum (90b) als Kühlraum zur Auskondensation von Wasser ausgebildet ist, und der innere, rohrförmige Raum (90c) zur Verdampfung von zugeführtem flüssigen Zusatzstoff dient und mit der, in den Eiserzeuger (61) führenden Zuleitung (67) verbunden ist.

20. Vorrichtung nach Anspruch 18 oder 19, dadurch gekennzeichnet, dass in der Zuleitung (67) ein steuerbares Abschlussorgan angeordnet ist.

**Claims**

1. A process for producing an ice crystal suspension by means of freeze evaporation at the triple point, the vapour which arises being compressed, then condensed, and the ice crystal suspension which is yielded being processed into a product, characterised in that during compression of the vapour there is added thereto a substance which is soluble in water and boils more readily than water, and by means of a heat exchanger the mixture is cooled by indirect heat exchange with a coolant to its triple point, condensed and to some extent frozen out, a heterogeneous mixture of ice particles and an aqueous solution of the admixed substance being yielded, whereafter the ice slurry, which is dissociated by means of a thawing operation from the heat exchanger, is separated at least to some extent into ice and aqueous solution, whereafter the admixed substance is separated at least to some extent from the aqueous solution and returned to the process, and finally the separated ice particles are supplied to the freeze-evaporating ice suspension for further ice production.

2. A process according to claim 1, characterised in that the substance is admixed to the vapour intermittently.

3. A process according to claim 1, characterised in that the substance is added to the vapour solely during the thawing operation..

4. A process according to claim 1, characterised in that the aqueous solution yielded in the condensation of the compressed water vapour and admixed substance has at the triple point a vapour pressure not higher than the vapour pressure of pure water at the triple point.

5. A process according to claim 1, characterised in that ethanol is used as admixed substance.

6. An apparatus for performing a process according to claim 1 comprising an ice maker (1, 61) having: a first chamber (2; 62) in which an ice crystal suspension is produced by freeze evaporation; a second cooling chamber (3; 63) in which heat exchangers (19; 79) are disposed and in which the mixture of water vapour and admixed substance is condensed on to the heat exchanger (19; 79); and a compressor (8 - 12; 69, 71) between the two chambers (2, 3; 62, 62), characterised in that a feed line (6; 67) for the substance to be admixed to the vapour is disposed between the two chambers (2, 3; 62, 63), the heat exchangers (19, 79) can be so operated that in the second cooling chamber (3; 63) ice particles are frozen out on to the heat exchanger (19; 79) whereafter the ice particles are thawed off, a third chamber (4, 64) is connected to the second chamber (3; 63) and the mixture of ice and aqueous solution which is evolved during the thawing operation enters the third chamber (4, 64), and the same is followed by aids (31, 30) for separating the ice particles from the aqueous solution and for separating the admixed substance from the aqueous solution and for supplying the separated ice particles to the first chamber (2; 62).

7. An apparatus according to claim 6, characterised in that a number of compressors are disposed in parallel to compress the vapour.

8. An apparatus according to claim 6, characterised in that the ice maker (1) is a constructional unit, the three chambers (2, 3, 4) being disposed vertically one above another.

9. An apparatus according to claim 6, characterised in that the compressor is a vapour Jet compressor (8 to 12).

10. An apparatus according to claims 6 and 8, characterised in that a discharge line (24) for returning water vapour enriched with admixed substance to the intake chamber of the compressor (8 to 12) is connected to the top part of the third chamber (4).

11. An apparatus according to claims 9 and 10, characterised in that the return line (24) extends to the first stage (8, 9) of the vapour jet compressor (8 to 12).

12. An apparatus according to claim 6, characterised in that the ice maker (61) is a constructional unit, the first two chambers (62, 63) being disposed horizontally one beside another while the third chamber (64) is disposed below the second chamber (63).

13. An apparatus according to claim 6, characterised in that the compressor is an axial flow compressor (69, 71).

14. An apparatus according to claim 13, characterised in that a further vapour jet compressor (68, 71) is provided.

15. An apparatus according to claims 8 and 9, characterised in that a feed line extending to a countercurrent washer (31) is connected to the third chamber (4) of the ice maker (1), the top part of the washer (31) is connected by way of an ice crystal suspension delivery line to the top part of the first chamber (2), and a vapour producer (30) is provided whose water side is disposed in parallel to the washer (31) and whose vapour side is connected to the compressor (8 to 12), and a line for discharging water to the entry (25) of the third chamber (4) of the ice maker (1) is connected to the bottom part of the washer (31).

16. An apparatus according to claim 15, characterised in that an ice crystal suspension discharge line is connected to the lower part of the first chamber (2) and the feed water feed line (51) extends to such discharge line, and the discharge line (52) for the mixture consisting of feed water and ice crystal suspension is connected to a dewatering unit (33) which has a discharge line (53) for concentrated product and which is connected on its water side to the washer (31).

17. An apparatus according to claim 15, characterised in that a discharge line for refluxing some of the ice crystal suspension to the top part of the first chamber (2) is connected to the bottom part of the first chamber (2).

18. An apparatus according to claims 12 and 14, characterised in that a discharge line for water is connected to the third chamber (64) of the ice maker (61) and extends to a vapour producer (30) which is effective to expel the admixed substance and whose vapour side is connected to the ice maker (61) by a feed line (67), the vapour being used as propellant in the vapour jet compressor (68, 71).

19. An apparatus according to claim 18, characterised in that the vapour producer (90) has three concentric chambers (90a, 90b, 90c), the outermost chamber (90a) being a fall film evaporator, the central chamber (90b) being a cooling chamber for condensing out water and the inner tubular chamber (90c) serving to evaporate supplied liquid additive and being connected to the feed line (67) to the ice maker (61).

20. An apparatus according to claim 18 or 19, characterised in that a controllable closure element is disposed in the feed line (67).

**Revendications**

1. Procédé de production d'une suspension de cristaux de glace par évaporation-congélation au point triple, suivant lequel la vapeur dégagée subit une compression suivie d'une condensation et la suspension obtenue de cristaux de glace subit la transformation en produit final, caractérisé en ce qu'une substance qui est soluble dans l'eau et bout plus bas que l'eau est additionnée à la vapeur pendant la compression de cette dernière et en ce que le mélange subit sur un échangeur de chaleur un refroidissement à son point triple, une condensation et une congélation partielle par échange indirect de chaleur avec un réfrigérant, un mélange hétérogène de particules de glace et de solution aqueuse de la substance additionnée étant ainsi obtenu, en ce qu'ensuite le mélange de glace et de liquide, qui est dégagé de l'échangeur de chaleur par fonctionnement de ce dernier en mode de dégel, subit au moins partiellement une séparation en glace et en solution aqueuse, puis en ce que la substance additionnée est au moins séparée partiellement de la solution aqueuse et recyclée dans le processus et en ce que, finalement, les particules séparées de glace sont dirigées dans la suspension de glace en cours d'évaporation-congélation pour la suite de la production de glace.

2. Procédé selon la revendication 1, caractérisé en ce que la substance est additionnée par intermittence à la vapeur.

3. Procédé selon la revendication 1, caractérisé en ce que la substance est additionnée à la vapeur exclusivement pendant le mode de fonctionnement en dégel.

4. Procédé selon la revendication 1, caractérisé en ce que la solution aqueuse obtenue pendant la condensation de la vapeur d'eau comprimée et de la substance additionnée a, au point triple, une tension de vapeur qui n'est pas supérieure à celle de l'eau pure au point triple.

5. Procédé selon la revendication 1, caractérisé en ce que la substance additionnée est de l'éthanol.

6. Dispositif pour la mise en oeuvre du procédé selon la revendication 1, comprenant un générateur de glace (1 ; 61) qui comporte une première chambre (2 ; 62) dans laquelle est produite une suspension de cristaux de glace par évaporation-congélation, une seconde chambre froide (3 ; 63) dans laquelle des échangeurs de chaleur (19 ; 79) sont disposés et dans laquelle a lieu sur lesdits échangeurs (19 ; 79) une condensation du mélange se composant de vapeur d'eau et de la substance additionnée, ledit dispositif comprenant également un compresseur (8-12 ; 69, 71) disposé entre les deux chambres (2, 3 ; 62, 63), caractérisé en ce qu'une conduite d'alimentation (6 ; 67) de la substance additionnée à la vapeur est disposée entre les deux chambres (2, 3 ; 62, 63), en ce que les échangeurs de chaleur (19 ; 79) peuvent être amenés à fonctionner de manière qu'il se produise dans la seconde chambre froide (3; 63) une congélation des particules de glace sur l'échangeur de chaleur (19 ; 79) et ensuite un dégel des particules de glace, en ce qu'une troisième chambre (4 ; 64), dans laquelle parvient le mélange de glace et de solution aqueuse qui est libéré pendant le fonctionnement en dégel, communique avec la seconde chambre (3 ; 63) et en ce que des dispositifs auxiliaires (31 ; 30) montés à la suite de la troisième chambre (4 ; 64) sont prévus pour la séparation des particules de glace de la solution aqueuse ainsi que pour la séparation de la substance additionnée de la solution aqueuse et pour l'amenée des particules séparées de glace dans la première chambre (2 ; 62).

7. Dispositif selon la revendication 6, caractérisé en ce que plusieurs compresseurs sont disposés en parallèle pour comprimer la vapeur.

8. Dispositif selon la revendication 6, caractérisé en ce que le générateur de glace (1) est constitué en unité modulaire dans laquelle les trois chambres (2, 3, 4) sont superposées verticalement.

9. Dispositif selon la revendication 6, caractérisé en ce que le compresseur est du type à jet de vapeur (8 à 12).

10. Dispositif selon les revendications 6 et 8, caractérisé en ce qu'une conduite d'évacuation (24), destinée au recyclage de vapeur d'eau enrichie en substance additionnée dans la chambre d'aspiration du compresseur (8 à 12), est raccordée à la partie supérieure de la troisième chambre (4) du générateur de glace (1).

11. Dispositif selon les revendications 9 et 10, caractérisé en ce que la conduite de recyclage (24) débouche dans le premier étage (8, 9) du compresseur à jet de vapeur (8 à 12).

12. Dispositif selon la revendication 6, caractérisé en ce que le générateur de glace (61) est réalisé sous forme d'une unité modulaire dont les deux premières chambres (62, 63) sont juxtaposées horizontalement et la troisième chambre (64) est disposée sous la deuxième (63).

13. Dispositif selon la revendication 6, caractérisé en ce que le compresseur est du type centrifuge axial (69, 71).

14. Dispositif selon la revendication 13, caractérisé en ce qu'il comprend en plus un compresseur à jet de vapeur (68, 71).

15. Dispositif selon les revendications 8 et 9, caractérisé en ce qu'une conduite menant à un laveur à contre-courant (31) est raccordée à la troisième chambre (4) du générateur de glace (1), en ce que la partie supérieure du laveur à contre-courant (31) est reliée par une conduite de transport d'une suspension de cristaux de glace à la partie supérieure de la première chambre (2) et en ce que, par ailleurs, un générateur de vapeur (30) est monté de manière à être disposé côté eau en parallèle avec le laveur à contre-courant (31) et à communiquer côté vapeur avec le compresseur (8 à 12), et en ce qu'une conduite d'évacuation d'eau dans l'admission (25) de la troisième chambre (4) du générateur de glace (1) est raccordée à la partie inférieure du laveur à contrecourant (31).

16. Dispositif selon la revendication 15, caractérisé en ce qu'une conduite d'évacuation d'une suspension de cristaux de glace, dans laquelle débouche la conduite (51) d'admission d'eau d'alimentation, est raccordée à la partie inférieure de la première chambre (2) et en ce que la conduite (52) d'évacuation du mélange d'eau d'alimentation et d'une suspension de cristaux de glace est raccordée à un appareillage de déshumidification (33) qui comporte une conduite (53) d'évacuation du produit concentré et qui communique côté eau avec le laveur à contre-courant (31).

17. Dispositif selon la revendication 15, caractérisé en ce qu'une conduite d'évacuation raccordée à la partie inférieure de la première chambre (2) du générateur de glace (1) est destinée à recycler une fraction de la suspension de cristaux de glace dans la partie supérieure de la première chambre (2). ·

18. Dispositif selon les revendications 12 et 14, caractérisé en ce qu'une conduite d'évacuation d'eau, qui est raccordée à la troisième chambre (64) du générateur de glace (61), débouche dans un générateur de vapeur (90) destiné à chasser la substance additionnée et communiquant côté vapeur avec le générateur de glace (61) par une conduite d'admission (67), la vapeur étant utilisée en jet d'entraînement dans le compresseur à jet de vapeur (68, 71).

19. Dispositif selon la revendication 18, caractérisé en ce que le générateur de vapeur (90) comprend trois chambres concentriques (90a, 90b, 90c), la chambre extérieure (90a) étant conformée en évaporateur à film en écoulement libre, la chambre médiane (90b) étant conformée en chambre froide de condensation de l'eau et la chambre tubulaire intérieure (90c) étant destinée à la vaporisation de l'additif liquide admis et communiquant avec la conduite d'arrivée (67) menant dans le générateur de glace (61).

20. Dispositif selon la revendication 18 ou 19, caractérisé en ce qu'un organe de fermeture pouvant être manoeuvré est disposé dans la conduite d'arrivée (67).

FIG. 1b

FIG. 1a

FIG. 2a

FIG. 2b

FIG. 3